# EUROPEAN PATENT SPECIFICATION

(11) **EP 2 796 628 B1**
(45) Date of publication and mention of the grant of the patent: **06.11.2019**
(21) Application number: 13165169.7
(22) Date of filing: 24.04.2013
(51) Int. Cl.: E03F 5/04, E03F 5/10, E03F 5/02, F16L 25/14

(54) **Improved gulley**
Verbesserter Abzugskanal
Bonde améliorée

(43) Date of publication of application: 29.10.2014
(73) Proprietor: D & B Ingenieurs B.V., 1901 MA Castricum (NL); SVA B.V., 6031 MZ Nederweert (NL)
(72) Inventor: Bakker, Wiebe, 1043 DS Amsterdam (NL); Dijkstra, Wietse, 1043 DS Amsterdam (NL); Korten, Frank, 1043 DS Amsterdam (NL)
(74) Representative: De Vries & Metman

(56) References cited:
- EP-A2- 0 097 392
- WO-A1-2011/131656
- CN-U- 202 325 111
- DE-A1- 2 443 174
- DE-A1- 19 619 619
- DE-C- 929 043
- DE-U1- 20 300 892
- DE-U1- 20 315 084
- GB-A- 2 078 327
- GB-A- 2 437 598
- JP-A- 2005 240 363
- NL-A- 8 101 127
- NL-A- 8 203 888
- US-A- 649 002
- US-A- 3 988 867
- US-A1- 2005 077 727
- US-A1- 2007 145 739

## Description

### TECHNICAL FIELD

The present disclosure relates to gullies, for receiving liquids, usually collected from overhead, and discharging these through an outlet in a drain. In particular, the present disclosure relates to gullies comprising a gulley pot, an outlet and a baffle that is movable with respect to the gulley pot such that the outlet is overlapped by the baffle acting as a strainer or an odour trap, or, respectively, the outlet is uncovered by the baffle.

### BACKGROUND

Gullies of the aforementioned type are known in the art, e.g. from GB 205,879, DE 24 43 174, DE 81 984, US 649,002 and NL 1 005 621. Further, CA 2,007,415 and GB 17,573 disclose gullies with baffles integrated into detachable traps that are inserted into the gulley outlet as a whole.

In these gullies, the baffle or the entire trap, needs to be removed from the gulley pot when it is desired to access the outlet and connected ductwork, e.g. for maintenance. The baffles and the respective mountings may therefore become damaged and removed baffles may get lost.

An improved gulley is disclosed in EP 2 561 152, which discloses a gulley of the aforementioned type, wherein the baffle is pivotally fixed to the gulley pot such that, in use, the baffle is movable between first and second stable positions with respect to the gulley pot in which the baffle overlaps or, respectively, uncovers the outlet. The stable positions facilitate on the one hand use for odour trapping and on the other hand moving the baffle out of the way for inspecting and/or servicing the outlet.

Further improvements to gullies, in particular with respect to ease of manufacturing, use and/or costs are desired.

For completeness sake, further reference is made to JP 2005-240363, EP 0 097 397, GB 2 437 598, DE 19 619 619, NL 8 101 127, DE 929 043, DE 203 00 892 and GB 2 078 327.

### SUMMARY

In view of the above, a gulley and a baffle assembly according to the appended claims are provided.

In an aspect, a gulley of the aforementioned type is provided, wherein the baffle is attached to the gulley pot such that the baffle is movable between a first stable position with respect to the gulley pot in which position the baffle overlaps and covers the outlet and extends below an underside of the outlet and a second stable position with respect to the gulley pot in which position the outlet is substantially uncovered by the baffle, and wherein the gulley comprises a frame. In use, the frame is fixed to the gulley pot and the baffle is movably attached to the frame and wherein the frame and the baffle comprise cooperating engagement members for releasably locking the baffle in at least the second stable position with respect to the gulley pot. Locking of the baffle in the second position ensures reliable opening of the outlet and prevents falling of the baffle that might cause damage and/or loss of material, possibly even hurting workers. The use of a frame enables selection of particular materials for the construction, e.g. metals and/or synthetic materials like plastics that can be readily moulded, worked, repaired and/or replaced, independently from the gulley pot that also can be of a more robust, heavy coarse and/or permanent material like concrete. The frame further facilitates meeting accurate tolerances of the baffle and frame, allowing a smooth movement and accurate locking. Also, providing an assembly of a frame and a baffle allows retrofitting existing gullies to an embodiment according to the present disclosure. The baffle and frame may also comprise cooperating engagement members for releasably locking the baffle in the first stable position.

In an advantageous embodiment, the baffle is slidable along at least part the frame between the first and second stable positions. This facilitates use in relatively narrow gulley pots, which lacks sweeping space for a pivotable baffle. In a slidable arrangement, smooth cooperating sliding surfaces may be particularly relevant. The engagement members may comprise profiled portions in the sliding surfaces, e.g. bumps and/or recesses.

In an embodiment, at least one of the frame and the baffle comprise one or more flexible portions facilitating locking of the engagement members, in a particular embodiment the baffle may be of a resilient material.

In an embodiment, the baffle covers the frame on upper and lateral side in at least the first stable position, and preferably also the second stable position. Thus, the baffle envelopes the frame in at least the first stable position, and preferably also the second stable position. Thus soiling of the frame and/or connection parts between the baffle and frame by dirt collected in the gulley can be reduced or prevented, which improves reliability of the movement of the baffle between the first and second stable positions. This is considered particularly relevant for a sliding arrangement, since there clean sliding surfaces facilitate movement and may ensure good closure between the baffle and frame for odour trapping. A concave baffle, having a general U-shape in cross section may further provide opposing baffle portions that are somewhat flexible and resiliently separable even for hard materials like cast iron, which resiliency can be useful for operating engagement members for locking the baffle in a particular position to the frame.

In an embodiment, the baffle is latched to the gulley pot, in particular being latched to the frame, e.g. being attached to the frame by snapping. This hinders detachment and removal of the baffle from the gulley pot and the frame, where applicable. A snapping attachment further facilitates assembly of the gulley, e.g. during manufacturing and/or repair.

In an aspect a gulley comprising a gulley pot, an outlet and a baffle is provided, in particular a gulley of the aforementioned type, wherein the baffle extends into the gulley pot with an outer surface having a positive slope and a height, the outer surface comprising a roughened profile extending over substantially the height for collecting dirt and/or providing grip for animal paws, e.g. of frogs and toads. The positive slope, meaning that the lower end of the surface extends further into the gulley pot than the upper end so that the surface faces upward is formed, and roughened surface of the baffle ensure that at least part of the dirt received in the gulley is collected on the surface. This weighs down the baffle. As a consequence, the baffle may be constructed lighter-weight compared to known baffles, which reduces material costs. Further, the grip for animal paws provided by the roughened surface allows animals fallen into the gulley to escape, for it has been found that each year significant numbers of frogs, toads, rodents and/or ducklings fall into gullies, become trapped there and die. The present gulley reduces such lamentable loss of animal lives and the possible consequences of decaying animal carcasses in gullies such as cause bad odours, pollution of downstream sewer water and/or spreading of germs and/or diseases.

The gulley may comprise a further animal escape ramp or -ladder, preferably at least part of the baffle forming at least part of the animal escape ramp or -ladder, which may be (releasably) attached to a fitting provided in the gulley pot.

For trapping of sand and mud, the profile should have a typical depth and lateral separation of features of a few tens of millimetres or more, e.g. 0.2 mm or more. This tends also to suffice for frogs and toads, in particular if the slope of the baffle surface is about 15 degrees to the vertical. A coarser profile and/or a larger angle may provide better dirt retention and possible foot-hold for animals. The structure of the profile may be random, e.g. like sandpaper or leather, and/or comprise regularly arranged bumps, ridges, grooves, ribs, etc. Crossing diagonal ribs and/or grooves provide pockets for collecting dirt.

A profile of regularly spaced substantially horizontal ribs with about 2-5 mm width and spacing, e.g. about 3 mm, and about 1-2 mm height, e.g. about 1.5 mm, at an angle to the vertical of about 15-20 degrees is considered to suffice for escape of frogs, toads and rodents, and also to trap sand and small pebbles to weigh down the baffle. A mass of dirt may increase the retention force of the baffle to further trap larger debris objects. Larger debris may facilitate further assist escape of animals. A profile with typical feature sizes of larger than a few millimetres, e.g. tens of millimetres, could retain large objects which could cause (faster) clogging of the gulley, and could complicate cleaning of the gulley.

In an aspect, a gulley, in particular gulley according to any other embodiment disclosed herein, is provided comprising a gulley pot, an outlet, a frame and a baffle, wherein, in use the frame is fixed to the gulley pot and the baffle is pivotally connected to the frame such that the baffle is pivotal between a first stable position (I) with respect to the gulley pot in which position the baffle overlaps and covers the outlet and extends below an underside of the outlet as a strainer and/or odour trap and a second stable position (II) with respect to the gulley pot in which position the outlet is substantially uncovered by the baffle, wherein the frame and baffle form a hinge with a pivot and a hook movably arranged about the pivot. The pivot has a portion with a non-circular cross sectional shape with a minimum width and a maximum width with respect to the pivot axis. The hook defines an interior space, having a body partly surrounding the interior space, and provides an opening to the interior space that is wider than the minimum width of the pivot but narrower than the maximum width of the pivot. The frame and baffle are arranged such that the hinge can be operably assembled with the hook engaging around the pivot in a first relative angle of the frame and baffle. The gulley is configured such that, in use, the frame and baffle are configured to rotate about the pivot over an angular range, wherein the first relative angle is outside said angular range.

Thus, the pivot can only enter the hook opening, and the hook be made to grip around the pivot, at a relative angle of rotation that cannot occur in operational arrangement of the baffle in use and when operably mounted in the gulley pot. This ensures that the hinge can be assembled when the frame is detached from the gulley pot, and it can preferably be disassembled as well, whereas it prevents disassembly and loss of the baffle. Such (pivot of) a frame and baffle may facilitate manufacturing via moulding techniques, as favoured for synthetic materials like plastics.

In aspect, the frame comprises deformable fixing plug portions, preferably as an integrated, advantageously unitary portion with the remainder of the frame. These facilitate fixing the frame, possibly with a baffle attached, to a wall having holes for receiving the fixing plug portions, as no separate plugs need be provided. The frame may then be fixed by inserting, e.g. screwing, nailing, riveting, etc., a suitable fixation body into the plug and deform the plug portion against one or more walls of the respective hole.

For easy lifting of the baffle, the baffle may comprise a connector for engagement by a lifting tool, in particular a gulley hook, and the baffle may comprise one or more guides for guiding the tool to, and preferably into engagement with, the connector. The connector may comprise a hook, a loop and/or another suitable structure. This facilitates operation of (the baffle of) the gulley.

In an embodiment, the gulley pot comprises a counter frame corresponding to the frame. This facilitates fixing the frame to the gulley. In particular, the gulley pot may comprise a drain stump and wherein the counter frame and the drain stump are an integrated object. This increases accurate placement of the counter frame, and thus the frame, to the position of the outlet. Efficiently, the counter frame may comprise portions defining openings configured for receiving the aforementioned deformable fixing plug portions in fitting relation, in particular when provided with a suitable fixation body.

To reduce manufacturing costs compared to cast iron, at least one of the baffle, the frame and the counter frame, where applicable, may be substantially made of synthetic material, e.g. one or more polymeric materials like plastics.

In an aspect, herewith a gulley is provided, in particular a gulley according to any other embodiment disclosed herein, comprising a drain stump and a connector for connecting the drain stump to a further drain pipe. The connector, which can be supplied individually for connecting two pipes in other situations, comprises a double-walled sleeve, the double wall having a U-shape in cross section with legs joined by a back, the legs being movable with respect to each other, wherein the back is tapered in outward direction with respect to the sleeve, such that the sleeve has a lumen with a widened opening on one side. This facilitates mounting the gulley and connecting it to the further drain pipe, for it has been found that drain pipes tend to set and shift position when buried and connections may be required at irregular angles to the gulley pots, which have to fit the surface, e.g. street or pavement, in which they are set. Further, different sizes of ducts may be encountered. The flexible sleeve can accommodate such deviation from the optimum. Due to the tapered side a relatively smooth surface finish to the lumen of the sump and subsequent duct may be provided which reduces flow restrictions and/or collection of dirt. It is believed that this reduces clogging of the lumen, the outlet and gulley.

In accordance with the above, for retrofitting a gulley pot to a gulley as described herein, a baffle assembly for a gulley is provided herewith comprising a baffle and a frame for fixing the baffle assembly to the gulley, the baffle and frame being, in use, movable with respect to each other and comprising cooperating engagement members for releasably locking the baffle and the frame in one or more relative positions. In another baffle assembly may comprise a baffle with a convex portion and a frame, the frame for fixing the baffle movably to the gulley pot, the convex portion comprising a surface providing a positive slope and a height when supported against a substantially vertical gulley pot wall in use, the surface comprising a roughened profile extending over substantially the height for collecting dirt and/or providing grip for animal paws, e.g. of frogs and toads.

### BRIEF DESCRIPTION OF THE DRAWINGS

The above-described aspects will hereafter be more explained with further details and benefits with reference to the drawings showing an embodiment of the invention by way of example.
Fig. 1 is a schematic perspective view of a gulley;
Fig. 2 is a cross section view of the gulley of Fig. 1 in the plane ii-ii indicated in Fig. 1;
Fig. 3 is a perspective view of a baffle assembly for the gulley of Figs. 1-2, having a baffle and a frame;
Fig. 4 is a bottom view of the baffle assembly of Fig. 3,
Figs. 5 and 6 are cross section views of the baffle assembly of Fig. 3 in the plane C-C indicated in Fig. 4, with the baffle and frame in different relative positions;
Figs. 5A and 6A are details VA and VIA, respectively, on an enlarged scale of Figs. 5 and 6, respectively;
Figs. 7 and 8 are views similar to Figs. 1 and 2 of another embodiment of a gulley;
Figs. 9-11 show (assembling of) a baffle assembly for the gulley of Figs. 7-8 in perspective (Fig. 9) and cross section (Figs. 10-11), respectively;
Fig. 12 shows a drain stump for use in a gulley, e.g. the gulley of Figs. 1 and/or 7;
Fig. 13 is a cross section view of the drain stump of Fig. 12 integrated into a gulley pot wall;
Fig. 14 is an axial cross section view of a connector connecting a gulley outlet to a further drain pipe;
Fig. 15 shows the connector in radial cross section in the plane XV indicated in Fig. 14.

### DETAILED DESCRIPTION OF EMBODIMENTS

It is noted that the drawings are schematic, not necessarily to scale and that details that are not required for understanding the present invention may have been omitted. The terms "upward", "downward", "below", "above", and the like relate to the embodiments as oriented in the drawings and in operable use, unless otherwise specified. Further, elements that are at least substantially identical or that perform an at least substantially identical function are denoted by the same numeral.

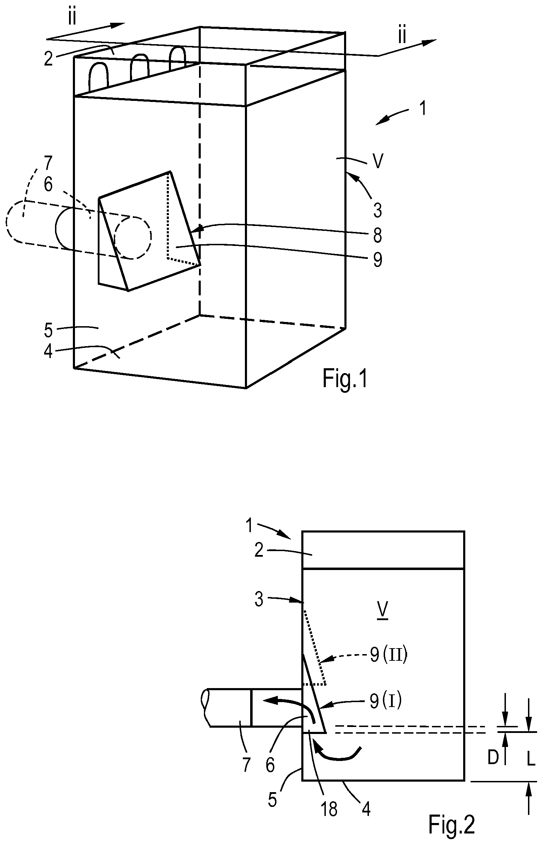

Figs. 1 and 2 show a gulley 1 comprising a lid or cover grate 2 for collecting rain water or street cleaning water in streets, sidewalks, gutters etc. and a gulley pot 3 having an interior volume V for receiving the water and associated dirt passing the cover grate 2. The gulley pot 3 comprises a bottom 4 and a side wall 5 provided with an outlet 6, leading to drain piping 7 (both shown in phantom in Fig. 1), here extending substantially horizontally for at least a first portion, and a baffle assembly 8 having a baffle 9 attached to the gulley pot 3. In use, the baffle 9 overlaps and covers the outlet, extending below an underside of the outlet by a distance D, providing a passageway for water from the gulley volume V to the drain piping 7 (Fig. 2, bold arrows) and forming a strainer for floating dirt and an odour trap when a water level in the gulley volume V is above the level L (Fig. 2 - full lines, position I).

For easy access to the outlet 6 and further drain piping 7, the baffle 9 should be removed.

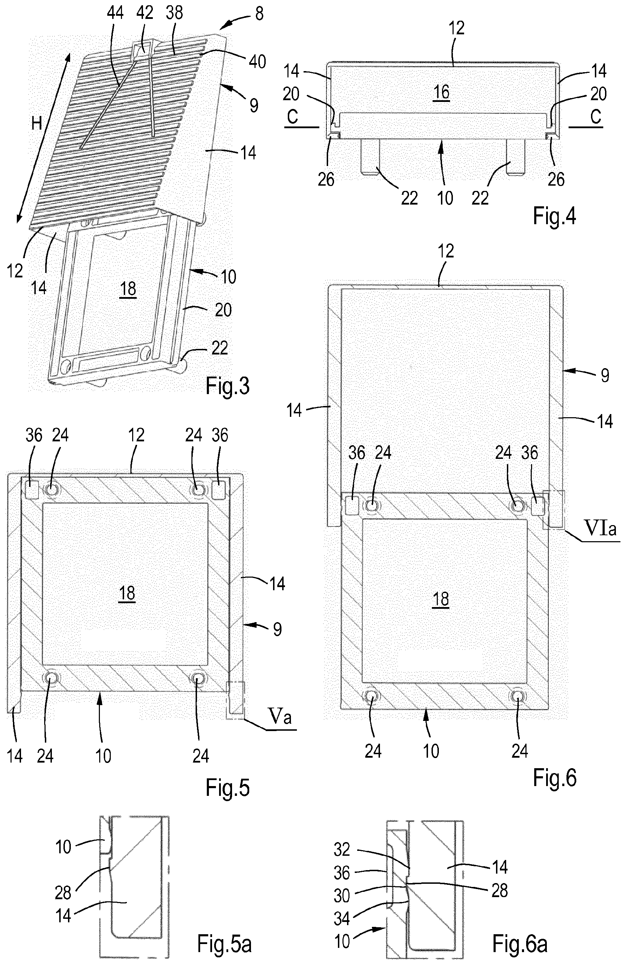

The baffle assembly 8 is shown in detail Figs. 3-4, with cross sections in Figs. 5-6 and details in Figs. 5A, 6A. The shown baffle assembly 8 comprises the baffle 9 and a frame 10. The baffle 9 is attache to the gulley pot 3 via the frame 10. The shown baffle 9 comprises a substantially rectangular front wall 12 and two side walls 14 extend substantially perpendicular to the front wall 12, tapering towards a top side of the baffle 9. The bottom side of the baffle 9 is open. Thus, the baffle 9 is concave with a cavity 16 for forming the passageway for water from the gulley.

The frame 10 provides an opening 18 arranged to surround the outlet 6. The frame 10 comprises ribs 20 on opposite lateral sides. On a rear side of the frame deformable fixing plug portions 22 are integrally formed with the frame 10 and having optional portions, here channels 24, for receiving a screw, nail or other fixing body to deform the plug portions. The plug portions may comprise apertures, e.g. slits and/or weakened portions to facilitate deformation.

The side walls 14 of the baffle 9 comprise flanges 26 for gripping around the ribs 18 of the frame 10 and engage these, attaching the baffle 9 to the frame 10, such that the baffle 9 can slide along the ribs 20 between first and second positions on opposite ends of the frame, as can be appreciated from Figs. 5 and 6 respectively. From Figs. 3 and 4 will be appreciated that the baffle 9 covers the frame 10 on upper and lateral sides, protecting at least the sliding surfaces of the frame 10 and the baffle 9 from dirt.

Further ribs and/or other attachment configurations may be provided.

Indicated in Fig. 2 and understood from at least Figs. 3-6, the baffle 9 is, when attached to the gulley pot 3, slidably movable between the first position (I) with respect to the gulley pot 3 in which position the baffle overlaps and covers the outlet 6 and extends below an underside of the outlet (Figs. 1, 2 (full lines) and 5) and a second position (II) with respect to the gulley pot in which position the outlet is substantially uncovered by the baffle (Figs. 2 (dotted lines), 3 and 6).

The baffle 9 may stably rest on the frame in the first position by gravity. Here, however, the baffle 9 comprises protrusions 28 on the interior side of the opposite side walls 14. These protrusions 28 are arranged to latch releasably behind a corresponding structure of the frame 10, here a bottom end corner of the ribs 20. This locks the baffle 9 into the first position with respect to the frame 10 and consequently to the gulley pot 3 when in use and attached to that. Such locking in the first position enables use of a material for the baffle 9 that is lighter than water, which would otherwise cause the baffle 9 to float and lose its functionality as odour trap and/or dirt strainer, if the baffle 9 is not weighed down otherwise, e.g. by retaining a sufficient amount of dirt.

In order to maintain the baffle 9 stably in the second position (II) the baffle 9 and frame 10 comprise cooperating engagement members in the form of the protrusion 28 on (the side walls 14 of) the baffle 9 and a recess 30 between protrusions 32, 34 for receiving the protrusion 28 (Fig. 6A). An equal structure is arranged on the opposite side of the frame 10 and baffle 9. The baffle and frame are somewhat resilient, the baffle 9 by its concavity and the frame 10 by the provision of apertures 36 adjacent the engagement members 30-34, so that the different engagement members 28 and 30-34 can interlock releasably.

The protrusions 28 and 32 are both formed as snap-latches with cooperating sliding ramps and facing locking surfaces. Thus, attaching the baffle 9 to the frame 10 is enabled by simply sliding the baffle 9 onto and/or over (the ribs 20 of) the frame 10 and allowing the protrusions 28 and 32 to snap and latch behind each other. However, removal of the baffle 9 from the frame 10 is prevented by engagement of the locking surfaces of the protrusions 28 and 32 onto each other (Fig. 6A).

Best seen in Figs. 1 and 3, the baffle 9 extends into the gulley pot with an outer surface 38 facing upwards with a positive slope - here being defined bay the taper angle of the baffle side walls 14 - and having a height H. The outer surface comprises a roughened profile extending over substantially the height H. Here, the profile is formed by ribs 40 protruding perpendicularly from the baffle 9 surface and extending, in use, substantially horizontal for collecting dirt and/or providing increased grip for animal paws, e.g. of frogs and toads.

Further, Fig. 3 shows that the baffle comprises an optional recess 42, eye, hook or other connector, for engagement by a gulley hook to lift the baffle 9 from the first to the second stable positions (I to II; Fig. 2), and/or to push the baffle 9 down to the second stable position (II, Figs. 1-2). The recess 42 reduces the working depth and reduces friction by tilt of the baffle 9 relative to the frame 10 when lifting the baffle by the recess 42 compared to a situation wherein the gulley hook - or another suitable tool - is hooked underneath one of the walls 12, 14 of the baffle 9. This increases user convenience and reduces (chances of) wear and/or damage to the baffle assembly.

To facilitate gripping the recess 42, the shown baffle 9 comprises optional guides 44 for guiding the gulley hook. It is considered that the rib-shaped guides 44, when of about the same size of the ribs 40, will not hinder collection of dirt by lower-placed ribs 40 and also will not significantly hinder animals escaping over the baffle 9.

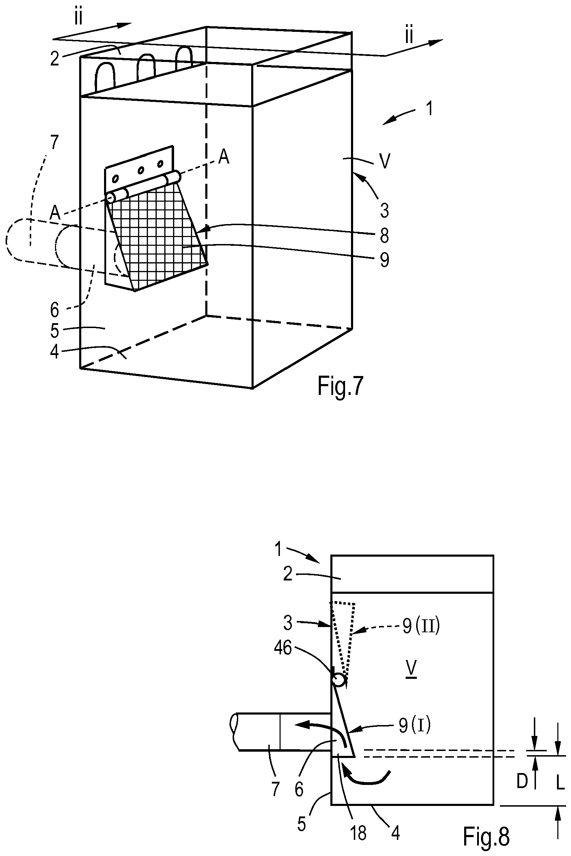

Figs. 7 and 8 show another embodiment, generally identical to that of Figs 1 and 2, however here the baffle 9 is pivotally attached to the gulley pot 3 being pivotal about a pivoting axis A between first and second stable positions (I, II; Fig. 8), wherein the outlet is overlapped and covered or, respectively, the outlet is uncovered and accessible, e.g. generally as known from EP 2 561 152.

The outer surface 38 of the baffle 9 is provided with crossing ribs to collect dirt and/or provide increased grip to animal paws.

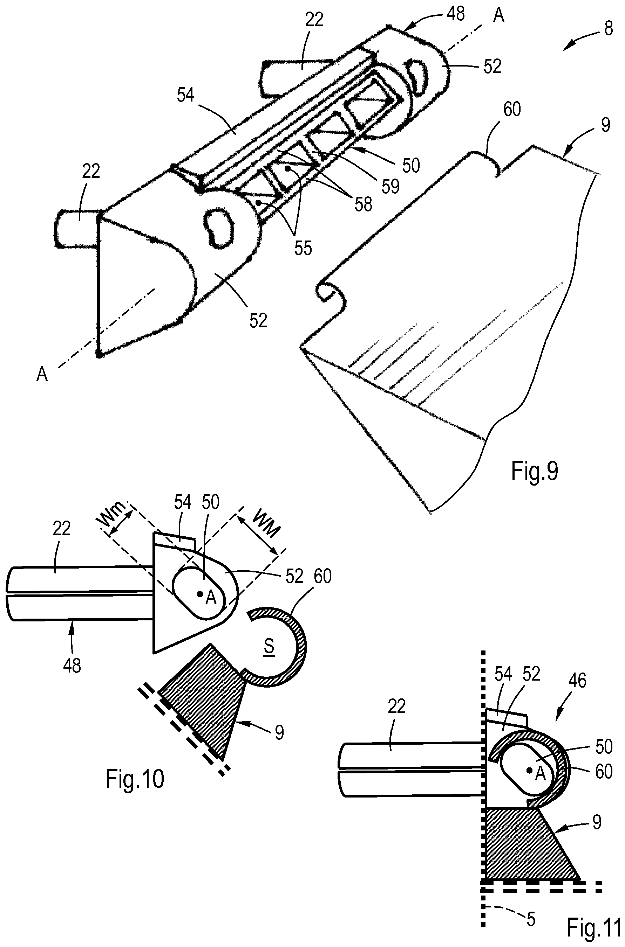

A suitable hinge 46 for a baffle assembly 8 for pivotally fixing the baffle 9 to the gulley pot 3 according to Figs. 7-8 is indicated in Figs. 9-11. The hinge 46 comprises a frame 48 with a pivot 50 attached to side portions 52 that are also connected with a beam 54. Split deformable fixing plug portions 22 are connected to the side portions 52. The pivot 50 has a non-circular cross sectional shape with a minimum width Wm and a maximum width WM with respect to the pivot axis A. Visible in Fig. 9 is that the pivot need not be a massive object, but may comprise hollow spaces 56 separated by walls 58, 59 defining the effective operable (outer) shape of the pivot 50 for interaction with the baffle 9. Such hollow spaces 56 save material and weight but do not substantially compromise robustness of the frame 48.

The baffle 9 comprises a hook 60 which defines an interior space S. The hook 60 provides an opening to the interior space S that is wider than the minimum width Wm of the pivot 50 but narrower than the maximum width WM of the pivot 50.

Thus, the pivot 50 may be inserted into the interior space S of the hook 60 such that the hook 60 engages the pivot 50 in a particular relative angle of the frame 48 and baffle 9, as indicated in Fig. 10. Then, (the hook 60 of) the baffle 9 can rotate around the pivot 50, e.g. to the situation in use depicted in Fig. 11. In Fig. 11 also the rear wall 5 of the gulley pot 3 is shown with a dotted line. From this, it will be clear that the frame 48 and baffle 9 rotatable about the pivot axis A over an angular range of little less than 180 degrees, determined by the gulley pot wall 5 and the taper angle of (the side walls 14 of) the baffle 9 (cf. Fig. 8). However, that angular range does not include the assembly angle of Fig. 10 and the gulley pot wall 5 and the beam 54 prevent disassembly of the hinge 46 and detachment of the baffle 9 from the frame 48 and the gulley pot 3. Thus, the baffle 9 is irreleasbly attached to the gulley.

The beam 54 increases rigidity and robustness of the frame 48. Another useful feature of the beam 54 is covering the hinge 46 at least partly against debris falling into the gulley.

The frame 48 and baffle 9 in particular the hinge 46 may comprise cooperating engagement members for releasably locking the baffle 9 to the frame in at least a position corresponding, in use, to the second stable position of the baffle 9 with respect to the gulley pot 3. E.g., the side portions 52 and side faces of the hook 60 may comprise cooperating protrusions and recesses (not shown) and/or or the hook may comprise a non-circular shape cooperating with one or more non-circular portions of the pivot 50.

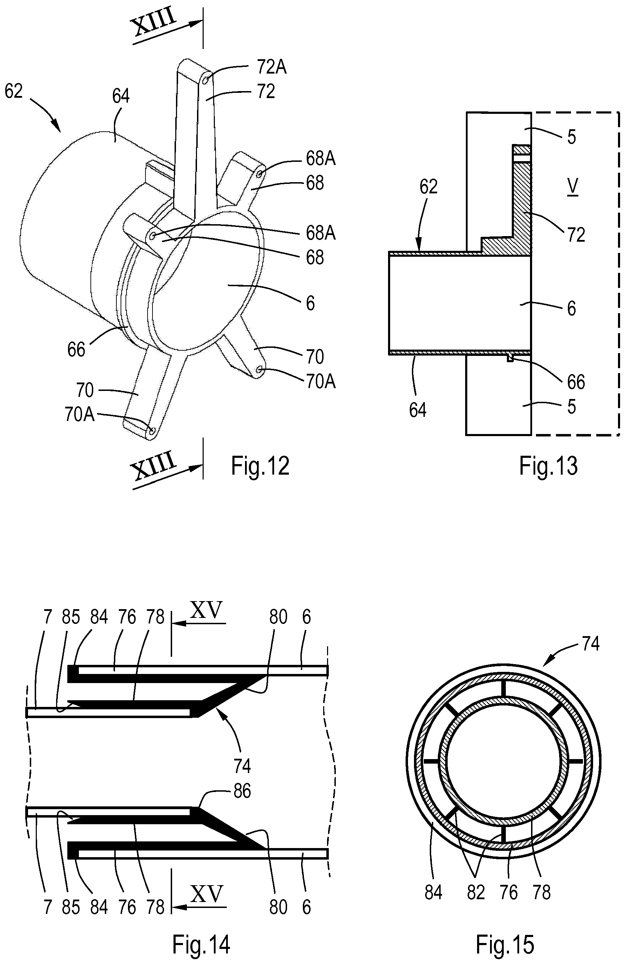

Typically, gulley pots 3 are made of concrete that is cast into a mould. Fig. 12 shows a drain stump 62 arranged for inclusion into the gulley pot 3 when that is moulded to provide the outlet 6 of the gulley 1. Fig. 13 is a cross section view of the drain stump 62 as indicated in Fig. 12, wherein also (wall 5 of) the gulley pot 3 is indicated.

From Figs. 12-13 will be apparent that the drain stump 62 comprises a pipe segment 64 to form the gulley outlet 6, and also comprises an anchoring ring 66 and a number of optional extensions 68, 70, 72 for anchoring the drain stump 62 into the material of the gulley pot 3. The extensions 68, 70, 72 also comprise optional holes 68A, 70A, 72A. Visible in Fig. 13 is that front sides of the extensions 68, 70, 72 are generally in the plane of interior side of the gulley pot wall 5, with respect to the gulley pot volume V. Thus, the holes 68A, 70A, 72A can be used for fixing one or more objects to the gulley pot 3. In particular, the holes 68A, 70A are arranged at positions matching the positions of corresponding attachment features of a frame of a baffle assembly 8, e.g. the fames 10 and/or 48. Thus, the drain stump 62 can serve as a counter frame corresponding to the respective frame 10, 48. In a particular example, the holes of the counter frame are configured to receive plug portions, e.g. the deformable fixing plug portions 22, of the frame(s). A drain sump and counter frame may be manufactured and included in the gulley pot separately, but is preferred that, as shown here, the counter frame and drain stump 62 are formed as an integrated object. This facilitates manufacture and reducing tolerances, e.g. the relative positions of the outlet 6 and the baffle 9 are well determined so that proper operation of the baffle 9 can be ensured.

It is possible to include frame portions extending into the gulley pot interior volume V in the drain sump 62 and/or other objects, however that significantly complicates manufacturing since such features tend to interfere with release of the cast and set gulley pot from the mould. A flush arrangement as indicated in Fig. 13 is therefore preferred.

The extension 72 facilitates attaching a further object to the gulley, e.g. an animal escape ladder and/or a provision for locking a baffle 9 into a first and/or second position relative to the gulley pot.

Fig. 14 shows a drain stump of a gulley in axial cross section, e.g. a rear part of the drain stump 62 of Figs. 12-13 connected to a drain pipe 7 of significantly smaller diameter. The size mismatch, which may be intended, is bridged by a connector 74. The connector 74, shown in radial cross section in Fig. 15 as indicated in Fig. 14, is a generally tubular object in the form of a double-walled sleeve with an outer wall 76 and an inner wall 78 connected with an intervening generally annular portion 80. Thus, the double wall has a U-shape in cross section with legs 76, 78 joined by a back 80. The legs 76, 78 are being movable with respect to each other. This allows accepting mismatch in axial alignment and/or orientation of the pipes 6, 7 (not shown), determined inter alia by the separation between the inner and outer walls 76, 78. Between the sleeve walls 76, 78 a soft resilient filling material may be inserted and/or wall portions of the connector material may be provided to control deformation of the connector 74 and/or resiliency of the sleeve walls 76, 78 with respect to each other. Thin radial walls or lamellae 82 are preferred since these may be easily integrated unitarily in a moulded connector 74 and provide substantially uniform reinforcement in radial directions to the sleeve 80.

The back 80 of the connector is tapered in outward direction with respect to the pipes 6, 7, and sleeve 74, such that the sleeve has a lumen with a widened opening on one side, in particular towards the gulley pot 3, such that water flow through the pipes 6, 7 as indicated by the wavy arrows experiences a generally smooth transition and obstruction and turbulence are reduced.

The outer wall 76 is provided with an optional outward flange 84 retaining the sleeve to the end of the outlet 6.

On an inner side of the connector 74, opposite to the back 80, an optional bevel 85 is provided, facilitating insertion of the drain pipe 7 into the connector.

On an inner side of the connector 74, close to the back 80, an optional inner flange 86 is provided providing a stopping edge to the drain pipe 7 inserted into the connector 74. The location of the inner flange 86 and in particular stopping edge helps defining the portion of the connector 74 that may deform and/or deflect when the connected pipes 6, 7 are not perfectly in one line and/or coaxial. Preferably, the height of the inner flange 86 with respect to the inner wall 78 is substantially equal to the wall thickness of the inserted drain pipe 7, to minimize flow restrictions for draining water from the gulley pot 3.

The invention is not restricted to the above described embodiments which can be varied in a number of ways within the scope of the claims. For instance the baffle and/or the gulley pot may be larger or smaller in one or more directions. The gulley pot may have a generally round shape in top view, wherein the frame and/or baffle are is formed to conform to the gulley pot shape.

Elements and aspects discussed for or in relation with a particular embodiment may be suitably combined with elements and aspects of other embodiments, unless explicitly stated otherwise.

## Claims

1. Gulley (1), comprising a gulley pot (3), an outlet (6) and a baffle (9),
wherein the baffle is attached to the gulley pot such that the baffle is movable between a first stable position (I) with respect to the gulley pot in which position the baffle overlaps and covers the outlet and extends below an underside of the outlet and a second stable position (II) with respect to the gulley pot in which position the outlet is substantially uncovered by the baffle,
wherein the baffle extends into the gulley pot with an outer surface having a positive slope and a height,
**characterised in that** the outer surface comprises a roughened profile extending over substantially the height (H) and having a typical depth and lateral separation of features of 0.2 mm or more for collecting dirt and/or providing grip for animal paws, e.g. of frogs and toads.

2. Gulley (1) according to claim 1 comprising a gulley pot (3), an outlet (6) and a baffle (9),
wherein the baffle is attached to the gulley pot such that the baffle is movable between a first stable position (I) with respect to the gulley pot in which position the baffle overlaps and covers the outlet and extends below an underside of the outlet and a second stable position (II) with respect to the gulley pot in which position the outlet is substantially uncovered by the baffle,
wherein the gulley comprises a frame (10), and
wherein in use, the frame is fixed to the gulley pot and the baffle is movably attached to the frame and wherein the frame and the baffle comprise cooperating engagement members for releasably locking the baffle in at least the second stable position with respect to the gulley pot.

3. Gulley (1) according to any preceding claim,
wherein the baffle (9) is slidable along at least part of the frame (10) between the first and second stable positions (I, II) .

4. Gulley (1) according to any preceding claim,
wherein the baffle (9) covers the frame (10) on upper and lateral sides in at least the first stable position (I), and preferably also the second stable position (II).

5. Gulley (1) according to any preceding claim,
wherein the baffle (9) is latched to the gulley pot (3), in particular being latched to the frame (10).

6. Gulley (1) according to any preceding claim,
wherein the frame (10) and baffle (9) are configured for pivotally fixing the baffle (9) to the gulley pot (3), the baffle and frame having a hinge (46) with a pivot (50) and a hook (60) movably arranged about the pivot,
wherein the pivot (48) has a portion with a non-circular cross sectional shape with a minimum width (Wm) and a maximum width (WM) with respect to the pivot axis (A), and the hook (60) defines an interior space and provides an opening to the interior space that is wider than the minimum width of the pivot but narrower than the maximum width of the pivot,
and wherein the frame (10) and baffle (9) are arranged such that the hinge (46) can be operably assembled with the hook (60) engaging the pivot (48) in a first relative angle of the frame and baffle, and the gulley is configured such that, in use, the frame and baffle are configured to rotate about the pivot over an angular range, wherein the first relative angle is outside said angular range.

7. Gulley (1) according to any preceding claim,
wherein the frame (10) comprises deformable fixing plug portions, preferably as an integrated, advantageously unitary portion with the remainder of the frame.

8. Gulley (1) according to any preceding claim,
wherein the baffle (9) comprises a connector (42) for engagement by a lifting tool, in particular a gulley hook, and wherein the baffle comprises one or more guides (44) for guiding the tool to, and preferably into engagement with, the connector (42).

9. Gulley (1) according to any preceding claim,
wherein the gulley pot (3) comprises a counter frame (62) corresponding to the frame (10), wherein in particular the gulley pot comprises a drain stump (64) and wherein the counter frame and the drain stump are an integrated object.

10. Gulley (1) according to claim 9, wherein the counter frame (62) comprises an anchoring ring (66) for anchoring the drain stump (62) into the material of the gulley pot (3).

11. Gulley (1) according to any preceding claim,
wherein at least one of the baffle (9), the frame (10) and the counter frame (62), where applicable, is substantially made of synthetic material, e.g. plastics.

12. Gulley (1) according to any preceding claim,
wherein in particular the profile (40, 44) comprises ribs (40), preferably substantially horizontal and/or diagonal (44) and crossing linear profile structures e.g. ribs and/or recesses.

13. Gulley (1) according to any preceding claim,
wherein the gulley pot (3) comprises an animal escape ramp or -ladder, preferably at least part of the baffle (9) forming at least part of the animal escape ramp or -ladder.

14. Gulley (1) according to any preceding claim, comprising a drain stump (62) and a connector (74) for connecting the drain stump to a further drain pipe,
wherein the connector (74) comprises a double-walled sleeve, the double wall having a U-shape in cross section with legs (76, 78) joined by a back (80), the legs (76, 78) being movable with respect to each other, wherein the back is tapered in outward direction with respect to the sleeve, such that the sleeve has a lumen with a widened opening on one side.

15. Gully according to any of the claims 2-13, comprising a baffle assembly (8) for manufacturing the gulley (1) of any one of the claims 2-13, the baffle assembly (8) comprising the respective baffle (9) and the respective frame (10) as specified in the respective claim for fixing the baffle assembly (8) to the gulley pot (3), the baffle (9) and frame (10) being, in use, movable with respect to each other and comprising cooperating engagement members for releasably locking the baffle and the frame in one or more relative positions.

## Patentansprüche

1. Ablauf (1), der einen Ablauftopf (3), einen Auslass (6) und eine Ablenkplatte (9) aufweist,
wobei die Ablenkplatte so am Ablauftopf angebracht ist, dass die Ablenkplatte zwischen einer ersten stabilen Position (I) in Bezug auf den Ablauftopf, in der die Ablenkplatte den Auslass überlagert und abdeckt und sich unter eine Unterseite des Auslasses erstreckt, und einer zweiten stabilen Position (II) in Bezug auf den Ablauftopf, in der der Auslass im Wesentlichen von der Ablenkplatte unbedeckt ist, bewegbar ist,
wobei sich die Ablenkplatte mit einer positiven Neigung und einer Höhe in den Ablauftopf erstreckt,
**dadurch gekennzeichnet, dass** die Außenfläche ein aufgerautes Profil aufweist, das sich im Wesentlichen über die Höhe (H) erstreckt und eine typische Tiefe und seitliche Beabstandung der Profilmerkmale von 0,2 mm oder mehr aufweist, um Schmutz zu sammeln und/oder Halt für Tierbeine zu bieten, zum Beispiel von Fröschen und Kröten.

2. Ablauf (1) nach Anspruch 1, die einen Ablauftopf (3), einen Auslass (6) und eine Ablenkplatte (9) aufweist,
wobei die Ablenkplatte so am Ablauftopf angebracht ist, dass die Ablenkplatte zwischen einer ersten stabilen Position (I) in Bezug auf den Ablauftopf, in der die Ablenkplatte den Auslass überlagert und abdeckt und sich unter eine Unterseite des Auslasses erstreckt, und einer zweiten stabilen Position (II) in Bezug auf den Ablauftopf, in der der Auslass im Wesentlichen von der Ablenkplatte unbedeckt ist, bewegbar ist,
wobei die Ablauf einen Rahmen (10) aufweist und
wobei der Rahmen im Gebrauch am Ablauftopf befestigt ist und die Ablenkplatte beweglich am Rahmen angebracht ist und wobei der Rahmen und die Ablenkplatte zusammenwirkende Eingriffselemente aufweisen, um die Ablenkplatte lösbar in mindestens der zweiten stabilen Position in Bezug auf den Ablauftopf zu arretieren.

3. Ablauf (1) nach einem der vorstehenden Ansprüche, wobei die Ablenkplatte (9) entlang mindestens eines Teils des Rahmen (10) zwischen der ersten und zweiten stabilen Position (I, II) verschiebbar ist.

4. Ablauf (1) nach einem der vorstehenden Ansprüche, wobei die Ablenkplatte (9) den Rahmen (10) mindestens in der ersten stabilen Position (I) und bevorzugt auch in der zweiten stabilen Position (II) an einer Oberseite und einer Lateralseiten abdeckt.

5. Ablauf (1) nach einem der vorstehenden Ansprüche, wobei die Ablenkplatte (9) am Ablauftopf (3) verrastet ist, insbesondere am Rahmen (10) verrastet ist.

6. Ablauf (1) nach einem der vorstehenden Ansprüche,
wobei der Rahmen (10) und die Ablenkplatte (9) zum schwenkbaren Befestigen der Ablenkplatte (9) am Ablauftopf (3) ausgebildet sind, wobei Ablenkplatte und Rahmen ein Scharnier (46) mit einem Drehzapfen (50) und einem bewegbar um den Drehzapfen angeordneten Haken (60) aufweisen,
wobei der Drehzapfen (48) einen Abschnitt mit einem nicht kreisförmigen Querschnitt mit einer Mindestbreite (Wm) und einer Höchstbreite (WM) in Bezug auf die Schwenkachse (A) aufweist und der Haken (60) einen Innenraum definiert und eine Öffnung zu dem Innenraum bietet, die breiter als die Mindestbreite des Drehzapfens, aber schmaler als die Höchstbreite des Drehzapfens ist,
und wobei der Rahmen (10) und die Ablenkplatte (9) so angeordnet sind, dass das Scharnier (46) in Wirkverbindung mit dem Haken (60), der mit dem Drehzapfen (48) in einem ersten Relativwinkel zu Rahmen und Ablenkplatte eingreift, montiert werden kann, wobei die Ablauf so ausgebildet ist, dass sich Rahmen und Ablenkplatte im Gebrauch über einen Winkelbereich um den Drehzapfen drehen, wobei der erste Relativwinkel außerhalb des Winkelbereichs liegt.

7. Ablauf (1) nach einem der vorstehenden Ansprüche, wobei der Rahmen (10) verformbare Arretierstifte aufweist, die bevorzugt mit dem Rest des Rahmens in einem Stück zu einem vorteilhaften einheitlichen Abschnitt ausgebildet sind.

8. Ablauf (1) nach einem der vorstehenden Ansprüche, wobei die Ablenkplatte (9) ein Verbindungselement (42) für einen Eingriff mittels eines Hebewerkzeugs aufweist, insbesondere einem Gullyhaken, und wobei die Ablenkplatte eine oder mehrere Führungen (44) zum Führen des Werkzeugs zum Verbindungselement (42) und bevorzugt zum Eingriff mit diesem aufweist.

9. Ablauf (1) nach einem der vorstehenden Ansprüche, wobei der Ablauftopf (3) einen dem Rahmen (10) entsprechenden Gegenrahmen (62) aufweist, wobei insbesondere der Ablauftopf ein Ablaufrohrstück (64) aufweist und der Gegenrahmen und das Ablaufrohrstück ein einstückiges Bauteil sind.

10. Ablauf (1) nach Anspruch 9, wobei der Gegenrahmen (62) einen Verankerungsring (66) zum Verankern des Ablaufrohrstücks (62) im Werkstoff des Ablauftopfes (3) aufweist.

11. Ablauf (1) nach einem der vorstehenden Ansprüche, wobei mindestens eines der Elemente Ablenkplatte (9), Rahmen (10) und Gegenrahmen (62), wo zutreffend, im Wesentlichen aus einem Kunststoffinaterial, z. B. Plastik, gebildet ist.

12. Ablauf (1) nach einem der vorstehenden Ansprüche, wobei insbesondere das Profil (40, 44) Rippen (40) aufweist, bevorzugt waagerecht und/oder diagonal (44) verlaufend und lineare Profilstrukturen, z. B. Rippen und/oder Ausnehmungen, kreuzend.

13. Ablauf (1) nach einem der vorstehenden Ansprüche, wobei der Ablauftopf (3) eine Tierfluchtrampe oder -leiter aufweist, wobei bevorzugt mindestens ein Teil der Ablenkplatte (9) mindestens einen Teil der Tierfluchtrampe oder -leiter bildet.

14. Ablauf (1) nach einem der vorstehenden Ansprüche, die ein Ablaufrohrstück (62) und ein Verbindungsstück (74) zum Anschließen des Ablaufrohrstücks an ein weiteres Abflussrohr aufweist,
wobei das Verbindungsstück (74) eine doppelwandige Hülse aufweist, die doppelte Wand im Querschnitt U-förmig mit durch ein Rückenteil (80) verbundenen Schenkeln (76, 78) ist, die Schenkel (76, 78) zueinander bewegbar sind, wobei sich das Rückenstück zur Hülse nach außen hin so verjüngt, dass die Hülse ein Lumen mit einer erweiterten Öffnung auf einer Seite aufweist.

15. Ablauf nach einem der Ansprüche 2-13, der eine Ablenkplattenanordnung (8) zum Herstellen des Ablaufs (1) nach einem der Ansprüche 2-13 aufweist, wobei die Ablenkplattenanordnung (8) die jeweilige Ablenkplatte (9) und den jeweiligen Rahmen (10), wie im jeweiligen Anspruch zum Befestigen der Ablenkplattenanordnung (8) am Ablauftopf (3) angegeben ist, wobei die Ablenkplatte (9) und der Rahmen (10) im Gebrauch relativ zueinander bewegbar und zusammenwirkende Eingriffselemente zum lösbaren Arretieren der Ablenkplatte und des Rahmens in einer oder mehreren Positionen zueinander aufweisen.

## Revendications

1. Rigole (1), comprenant un pot de rigole (3), une évacuation (6) et un déflecteur (9),
dans laquelle le déflecteur est attaché au premier pot de rigole de sorte que le déflecteur est mobile entre une première position stable (I) par rapport au pot de rigole dans laquelle le déflecteur chevauche et recouvre l'évacuation et s'étend sous une face inférieure de l'évacuation et une seconde position stable (II) par rapport au pot de rigole dans laquelle l'évacuation est sensiblement découverte par le déflecteur,
dans laquelle le déflecteur s'étend dans le pot de rigole avec une surface externe présentant une pente positive et une hauteur,
**caractérisée en ce que** la surface externe comprend un profil rugueux s'étendant sur sensiblement la hauteur (H) et présentant une profondeur et une séparation latérale d'éléments de 0,2 mm ou plus typiques pour la collecte d'impuretés et/ou la fourniture d'une prise pour des pattes d'animaux, tels des grenouilles et crapauds.

2. Rigole (1) selon la revendication 1 comprenant un pot de rigole (3), une évacuation (6) et un déflecteur (9),
dans laquelle le déflecteur est attaché au pot de rigole de sorte que le déflecteur est mobile entre une première position stable (I) par rapport au pot de rigole dans laquelle le déflecteur chevauche et recouvre l'évacuation et s'étend sous une face inférieure de l'évacuation et une seconde position stable (II) par rapport au pot de rigole dans laquelle l'évacuation est sensiblement découverte par le déflecteur,
dans laquelle la rigole comprend un cadre (10), et
dans laquelle lors de l'utilisation, le cadre est fixé au pot de rigole et le déflecteur est attaché de façon mobile au cadre et dans laquelle le cadre et le déflecteur comprennent des éléments d'entrée en prise coopératifs pour verrouiller de manière amovible le déflecteur dans au moins la seconde position stable par rapport au pot de rigole.

3. Rigole (1) selon une quelconque revendication précédente, dans laquelle le déflecteur (9) est coulissant le long d'au moins une partie du cadre (10) entre les première et seconde positions stables (I, II).

4. Rigole (1) selon une quelconque revendication précédente, dans laquelle le déflecteur (9) recouvre le cadre (10) sur des côtés supérieur et latéral dans au moins la première position stable (I), et de préférence également la seconde position stable (II).

5. Rigole (1) selon une quelconque revendication précédente, dans laquelle le déflecteur (9) est verrouillé sur le pot de rigole (3), en particulier verrouillé sur le cadre (10).

6. Rigole (1) selon une quelconque revendication précédente,
dans laquelle le cadre (10) et le déflecteur (9) sont configurés pour fixer de façon pivotante le déflecteur (9) au pot de rigole (3), le déflecteur et le cadre présentant une articulation (46) avec un pivot (50) et un crochet (60) agencé de façon mobile autour du pivot,
dans laquelle le pivot (48) présente une partie avec une forme transversale non circulaire avec une largeur minimale (Wm) et une largeur maximale (WM) par rapport à l'axe de pivot (A), et le crochet (60) définit un espace intérieur et fournit une ouverture à l'espace intérieur qui est plus large que la largeur minimale du pivot mais plus étroite que la largeur maximale du pivot,
et dans laquelle le cadre (10) et le déflecteur (9) sont agencés de sorte que l'articulation (46) peut être fonctionnellement assemblée avec le crochet (60) en prise avec le pivot (48) dans un premier angle relatif du cadre et du déflecteur, et la rigole est configurée de sorte que, lors de l'utilisation, le cadre et le déflecteur sont configurés pour tourner autour du pivot sur une plage angulaire, dans laquelle le premier angle relatif est à l'extérieur de ladite plage angulaire.

7. Rigole (1) selon une quelconque revendication précédente, dans laquelle le cadre (10) comprend des parties de fiche de fixation déformables, de préférence telles qu'une partie avantageusement unitaire intégrée avec le reste du cadre.

8. Rigole (1) selon une quelconque revendication précédente, dans laquelle le déflecteur (9) comprend un raccord (42) pour une entrée en prise avec un outil de levage, en particulier un crochet de rigole, et dans laquelle le déflecteur comprend un ou plusieurs guides (44) pour guider l'outil vers, et de préférence en prise avec, le raccord (42).

9. Rigole (1) selon une quelconque revendication précédente, dans laquelle le pot de rigole (3) comprend un contre-cadre (62) correspondant au cadre (10), dans laquelle en particulier le pot de rigole comprend un tube de vidange (64) et dans laquelle le contre-cadre et le tube de vidange sont un objet intégré.

10. Rigole (1) selon la revendication 9, dans laquelle le contre-cadre (62) comprend un anneau d'ancrage (66) pour ancrer le tube de vidange (62) dans le matériau du pot de rigole (3).

11. Rigole (1) selon une quelconque revendication précédente, dans laquelle au moins l'un du déflecteur (9), du cadre (10) et du contre-cadre (62), le cas échéant, est sensiblement composé de matériau synthétique, par exemple de plastique.

12. Rigole (1) selon une quelconque revendication précédente, dans laquelle en particulier le profil (40, 44) comprend des nervures (40), de préférence des structures de profil linéaire horizontales et/ou diagonales (44) et traversantes, par exemple des nervures et/ou des évidements.

13. Rigole (1) selon une quelconque revendication précédente, dans laquelle le pot de rigole (3) comprend une rampe ou échelle d'évacuation pour animaux, de préférence au moins une partie du déflecteur (9) formant au moins une partie de la rampe ou de l'échelle d'évacuation pour animaux.

14. Rigole (1) selon une quelconque revendication précédente, comprenant un tube de vidange (62) et un raccord (74) pour raccorder le tube de vidange à un autre tuyau de vidange,
dans laquelle le raccord (74) comprend un manchon à double paroi, la double paroi présentant une forme de U en coupe transversale avec des pieds (76, 78) assemblés par un dos (80), les pieds (76, 78) étant mobiles l'un par rapport à l'autre, dans laquelle le dos est fuselé dans une direction vers l'extérieur par rapport au manchon, de sorte que le manchon présente une lumière avec une ouverture élargie sur un côté.

15. Rigole selon l'une quelconque des revendications 2 à 13, comprenant un ensemble déflecteur (8) pour fabriquer la rigole (1) selon l'une quelconque des revendications 2 à 13, l'ensemble déflecteur (8) comprenant le déflecteur respectif (9) et le cadre respectif (10) selon la revendication respective pour fixer l'ensemble déflecteur (8) au pot de rigole (3), le déflecteur (9) et le cadre (10) étant, lors de l'utilisation, mobiles l'un par rapport à l'autre et comprenant des éléments d'entrée en prise coopératifs pour verrouiller de manière amovible le déflecteur et le cadre dans une ou plusieurs positions relatives.
